# EUROPEAN PATENT APPLICATION

(11) **EP 4 843 874 A1**
(43) Date of publication of application: **25.11.2026**
(21) Application number: 25741840.0
(22) Date of filing: 08.01.2025
(51) Int. Cl.: B62J 45/00, B62J 6/16, B62J 50/22, B62K 23/02, G06F 3/0482

(54) **STRADDLED VEHICLE SYSTEM, CONTROL METHOD, AND APPLICATION PROGRAM**

(30) Priority: 19.01.2024 JP 2024006709
(71) Applicant: Yamaha Hatsudoki Kabushiki Kaisha, Iwata-shi, Shizuoka 438-8501 (JP)
(72) Inventor: NOGI, Etsuji, Iwata-shi, Shizuoka 438-8501 (JP); YAMADA, Muneyuki, Iwata-shi, Shizuoka 438-8501 (JP)
(74) Representative: Stöckeler, Ferdinand
(86) International application number: PCT/JP2025/000280
(87) International publication number: WO 2025/154596

(57) **Abstract**

To provide a straddled vehicle system capable of presenting intended information in a short time for a large number of presentable information while suppressing an increase in the operation amount of a handlebar switch by a rider. The straddle vehicle system includes a straddle vehicle and an application program operating on a mobile information terminal capable of communicating with the straddle vehicle. The straddle vehicle includes a vehicle body, a handlebar switch, a vehicle image display device, and a vehicle image control device. The mobile information terminal includes a terminal operating device and a terminal control device. The application program is executed by the terminal control device to thereby cause the terminal control device to select image groups of image data transmittable to the vehicle image display device as selected image groups in response to a selection operation to the terminal operating device, and to, when the terminal control device has received a choice instruction from the vehicle image control device, sequentially choose one selected image group from the plurality of selected image groups and transmit the image data included in the chosen display image group. The vehicle image control device transmits, to the terminal control device, a choice instruction for causing the terminal control device to choose a display image group in response to an operation to the handlebar switch and to, when the vehicle image control device has received the image data, cause the vehicle image display device to display a content image of the image data.

## Description

### Technical Field

The present teaching relates to a straddled vehicle system, a control method, and an application program.

### Background Art

PTL 1 describes a display system mounted on a straddled vehicle. The display system includes a display unit, a communication unit, a handlebar switch provided on a handle, and a control unit. The communication unit communicates with a mobile device. The display system can display images of infotainment information transmitted from the mobile device in a display region of the display unit.

### Citation List

### Patent Literature

PTL 1: Japanese Patent Application Publication No. 2022-057764

### Summary of Invention

### Technical Problem

More specifically, the control unit of the display system mounted on the straddled vehicle generates image data based on infotainment information, which is the result of the search in the mobile device in response to an operation of the handlebar switch and template image data and transmits the image data to the display unit. The generated images are displayed on the display unit.

The types of information which can be presented to a rider of the straddled vehicle, including information generated by or stored in the mobile device and information obtained via networks, are increasing on a daily basis. The types and the number of information requested by the rider are also increasing. With the increase in the types of information, the types of applications (contents) generating and presenting the information are also increasing, and information presentation conditions and presentation choice methods are also changing on a daily basis. It is sometimes desired to be able to display intended information in a short time for a large number of presentable information and flexibly accommodate requests for the changes in the presentation conditions or the presentation choice methods while accommodating the increase in the types and the number of information and suppressing an increase in the operation amount of the handlebar switch by the rider of the straddled vehicle.

It is an object of the present teaching to provide a straddled vehicle system, a control method, and an application program capable of presenting intended information in a short time for a large number of presentable information while suppressing the increase in the operation amount of the handlebar switch by the rider of the straddled vehicle and flexibly accommodating the requests for changes in the presentation conditions or the presentation choice methods.

### Solution to Problem

The straddled vehicle system can provide various types of information, such as displaying images of information representing the state of the vehicle or displaying images of information on a location where the vehicle is traveling.

As various types of information become presentable, the number of operations when the rider chooses the intended information from the various types of information is likely to increase. For example, an increase in the types of presentable information results in that the rider operates the handlebar switch a large number of times until the sequentially presented information matches the intended type of information. The time until the intended type of information can be presented is prolonged.

In view of the above-described problem, the present inventors have extensively examined how to display the intended image in a short time for a large number of presentable information while suppressing the increase in the operation amount of the handlebar switch, and have obtained the following findings.

A terminal control device provided in a mobile information terminal selects, from a plurality of image groups including image data of one or more content images displayable on a vehicle image display device, the image groups to which the transmittable image data belongs as a plurality of selected image groups. For example, the terminal control device displays a list image representing a list of the image groups. The terminal control device accepts, while displaying the list image, an operation related to the displayed list image. A terminal operating device selects the image groups in response to the operation. A vehicle image control device mounted on the vehicle transmits a choice instruction to the terminal control device in response to an operation to the handlebar switch by a hand of the rider. Then, when the terminal control device has received the choice instruction from the vehicle image control device, the terminal control device sequentially chooses one selected image group from the plurality of selected image groups as a display image group and transmits the image data included in the chosen display image group. Upon receiving the choice instruction, the terminal control device transmits the image data of the chosen display image group. When the vehicle image control device has received the image data, the vehicle image control device causes the vehicle image display device to display the content images of the image data.

The terminal operating device of the mobile information terminal can accept an operation related to the displayed image while displaying the image, and therefore can perform an operation, such as choice by scrolling or tapping of the list of the image groups, for example. Therefore, even when the number of the image groups including the displayable content image is large, the number of the image group serving as a candidate can be narrowed down in a short time by a simple operation. In an operation to the handlebar switch operatable by the hand in a state of holding the handlebar, the intended group can be chosen by fewer operations by sequentially choosing one from the image groups after the selection rather than by sequentially choosing one from the displayable image groups before the selection. Therefore, the above-described configuration makes it possible to display the intended image in a short time for a large number of displayable images while suppressing the increase in the operation amount of the handlebar switch by the rider of the straddled vehicle. Based on this finding, the present teaching has been completed.

The present teaching can provide the following straddled vehicle system.
(1) A straddled vehicle system including a straddled vehicle and an application program configured to operate on a mobile information terminal capable of communicating with the straddled vehicle,
   the straddled vehicle including:
   a vehicle body containing a handlebar held by a hand of a rider of the straddled vehicle;
   a handlebar switch attached to the handlebar;
   a vehicle image display device attached to the vehicle body and configured to display an image; and
   a vehicle image control device having a function of communicating with the mobile information terminal and configured to control the vehicle image display device,
   the mobile information terminal including:
      a terminal operating device configured to accept, while displaying an image, an operation related to the displayed image; and
      a terminal control device as a computer having a function of communicating with the vehicle image control device and configured to control the terminal operating device,
      the application program being configured to be executed by the terminal control device to thereby cause the terminal control device to
      select, from a plurality of image groups including image data of one or more content images each displayable on the vehicle image display device, the image groups including the image data transmittable to the vehicle image display device as a plurality of selected image groups in response to a selection operation to the terminal operating device, and
      sequentially choose one display image group from the plurality of selected image groups each time the terminal control device receives a choice instruction of choosing one of the plurality of selected image groups from the vehicle image control device and transmit the image data included in the chosen display image group, and
      the vehicle image control device being configured to transmit, to the terminal control device, the choice instruction for causing the terminal control device to sequentially choose one selected image group from the plurality of selected image groups as the display image group in response to an operation to the handlebar switch by the hand of the rider in a state of holding the handlebar and to, when the vehicle image control device has received the image data included in the display image group from the terminal control device, cause the vehicle image display device to display the content image of the received image data.

According to the straddled vehicle system in (1) above, the terminal control device selects the image group, to which the transmittable image data belongs, as the selected image group from the plurality of image groups in response to the selection operation to the terminal operating device. Then, each time the terminal control device receives the choice instruction from the vehicle image control device, the terminal control device sequentially chooses one display image group from the plurality of selected image groups and transmits the image data included in the chosen display image group. The determination to transmit the image data in response to the reception of the choice instruction is performed by the terminal control device executing the application program.

The vehicle image control device transmits the choice instruction to the terminal control device in response to the operation to the handlebar switch by the hand of the rider. Upon receiving the choice instruction, the terminal control device in the mobile information terminal transmits the image data of the chosen display image group. The vehicle image control device receives the image data and causes the vehicle image display device to display the content image of the image data.

Thus, the original selected image groups serving as a source of candidates from which one is chosen in response to the operation to the handlebar switch are selected in advance using the terminal operating device in the mobile information terminal. The terminal operating device of the mobile information terminal accepts, while displaying an image, an operation related to the displayed image, and therefore can perform an operation, such as choice by scrolling or tapping of the list, while displaying the image of the list of the image groups. Thus, even when the number of the image groups including the displayable content image is large, the selected image group serving as the candidate can be selected in a short time by a simple operation. Then, in the operation to the handlebar switch operable by the hand in a state of holding the handlebar, the intended group can be chosen by fewer operations by sequentially choosing one from the selected image groups after the selection rather than by sequentially choosing one from the image groups before the selection. The function of choosing the selected image group and the function of choosing the display image group are provided in the mobile information terminal and the application program. Therefore, requests for changes in the display conditions or the display choice method can be accommodated by updating software of the mobile information terminal. Therefore, the changes in the display conditions or the display choice method can be accommodated without changing the functions or the structures of the straddled vehicle.

Thus, the above-described configuration makes it possible to present the intended information in a short time for a large number of presentable information while suppressing the increase in the operation amount of the handlebar switch by the rider of the straddled vehicle and to flexibly accommodate the requests for changes in the presentation conditions or the presentation choice method.

The straddled vehicle is a vehicle including a saddle-type seat. The straddled vehicle is a vehicle configured such that the rider rides astride the seat. The straddled vehicle is not limited to scooter-type, moped-type, off-road type, and on-road type motorcycles, and includes snowmobiles, watercrafts, all-terrain vehicles (ATVs), and the like. The straddled vehicle may include at least one front wheel and at least one rear wheel. The straddled vehicle is not limited to the motorcycles, and may be a motor tricycle in which a front wheel or a rear wheel contains a pair of right and left wheels or may be a motor quadricycle in which a front wheel and a rear wheel each contains a pair of right and left wheels. The straddled vehicle may be configured to be able to turn in a lean attitude in which the straddled vehicle is leaned toward the center of a curve.

The mobile information terminal is an information terminal portable by the rider. The mobile information terminal has such a size that the rider can carry the same. The mobile information terminal is, for example, a smartphone. However, the mobile information terminal is not particularly limited and may be a tablet computer or a wearable device. The mobile information terminal may also be detachably attached to the vehicle body when the rider rides on the straddled vehicle.

The image group includes image data corresponding to each of a plurality of content images, for example. The image group may include one content image, for example. The content image is a display image output as a result of the execution of a content program, such as a photo album, by the mobile information terminal, for example. In this case, each of the plurality of image groups is the content program, for example. The content image is not particularly limited and may be an image of image data received by the mobile information terminal from a server computer connected via the Internet as a result of the execution of a certain content program by the mobile information terminal, for example. The content image is not particularly limited and may be an image of image data stored in a memory of the mobile information terminal, for example. In this case, each of the plurality of image groups may be a folder or a directory including one or more content images. An operation image for controlling the mobile information terminal is different from the content image.

The vehicle image display device is, for example, a speedometer displaying the traveling speed of the straddled vehicle, for example. In this case, the vehicle image display device has, for example, a region where a numerical value of the traveling speed is displayed and a region where an image of the image data received from the terminal control device is displayed. In this case, the vehicle image display device may have a region where the numerical value of the traveling speed is displayed as an image and a region where an image of the image data received from the terminal control device is displayed. The vehicle image display device is attached to the handlebar, for example. However, the attachment position of the vehicle image display device is not particularly limited and the vehicle image display device may be attached to the vehicle body other than the handlebar, for example. The vehicle image display device displays, for example, a still image. More specifically, the vehicle image display device may have a function of limiting its display to a still image, for example. In this case, the configuration of the vehicle image display device can be simplified and the update of the displayed image can be completed through intermittent communication corresponding to one image. However, the display function of the vehicle image display device is not particularly limited, and, for example, it may be acceptable that a video can be displayed.

The terminal operating device is, for example, a touch screen. The touch screen has a display displaying an image and a translucent touch panel overlaid on this display. However, the structure of the terminal operating device is not particularly limited, and, for example, the terminal operating device may include a display displaying an image and a switch provided at a location away from the display.

The application program is a program executed by the terminal control device as a computer. The application program is, for example, a program wirelessly connected to the vehicle image control device mounted on the straddled vehicle to transmit the image data or acquire the image data from the straddled vehicle. The application program is also sometimes referred to as a connected application, for example. The application program is different from the operating software (OS) having the minimum functions required for the mobile information terminal as a computer to operate. For example, the terminal control device that executes the OS downloads and installs the application program via the Internet. Thus, the terminal control device executes the application program.

(2) The straddled vehicle system of (1), in which
the handlebar switch includes two or more first switches arranged along a first direction and two or more second switches arranged along a second direction different from the first direction,
the vehicle image control device is configured to transmit the choice instruction to the terminal control device when one of the first switches has been operated and to transmit, to the terminal control device, an image switching instruction causing the terminal control device to sequentially choose one content image from the display image group when one of the second switches has been operated, and
the application program is configured to be executed by the terminal control device to thereby cause the terminal control device to sequentially choose one content image from the display image group and transmit the one content image as the image data when the terminal control device has received the image switching instruction from the vehicle image control device.

According to the straddled vehicle system of (2) above, each of the plurality of selected image groups is chosen as the display image group by the operation of the first switch of the handlebar switch. Thus, the image group is chosen by the operation of the first switch. By the operation of the second switch, the content image included in the chosen display image group is chosen and transmitted. Thus, the content image in the display image group is chosen by the operation of the second switch. The direction in which the first switch is arranged and the direction in which the second switch is arranged are different from each other, making it easy to distinguish between the types of the operations. Thus, for example, the choice of the image group and the choice of the content image in the image group can be performed in a shorter time, even when the rider does not gaze at the handlebar switch, as compared with a case in which there is no arrangement and the choice types of (2) above. Thus, the intended information can be displayed in a shorter time for a large number of presentable information while suppressing the increase in the operation amount of the handlebar switch.

(3) The straddled vehicle system of (1) or (2), in which
the application program is configured to be executed by the terminal control device to thereby cause
the terminal control device to, when the terminal control device has received trigger information related to a specific image group included in the selected image group from the outside of the mobile information terminal, forcibly transmit the image data included in the specific image group without receiving the choice instruction.

The straddled vehicle system of (3) above makes it possible to display, in an interruption manner, a content image which is beneficial to be urgently displayed, such as an earthquake early warning, without waiting for the operation of the handlebar switch.

Further, the present teaching can provide the following control method.

(4) A control method for controlling the display of a vehicle image display device attached to a vehicle body of a straddled vehicle using a mobile information terminal including a terminal control device capable of communicating with the straddled vehicle and a terminal operating device, the method including:
selecting, from a plurality of image groups including image data of one or more content images each displayable on the vehicle image display device, the image groups including the image data transmittable to the vehicle image display device as a plurality of selected image groups in response to a selection operation to the terminal operating device;
transmitting a choice instruction for causing the terminal control device to sequentially choose one display image group from the plurality of selected image groups to the terminal control device in response to an operation to a handlebar switch attached to a handlebar of the vehicle body;
each time the terminal control device receives the choice instruction of choosing one of the plurality of selected image groups, sequentially choosing the one display image group from the plurality of selected image groups and transmitting the image data included in the chosen display image group; and
displaying the content image of the received image data on the vehicle image display device when the image data included in the display image group from the terminal control device has been received.

The above-described configuration makes it possible to display the intended information in a short time for a large number of presentable information while suppressing the increase in the operation amount of the handlebar switch by the rider of the straddled vehicle.

Further, the present teaching can provide the following straddled vehicle system.
(5) A straddled vehicle system including a straddled vehicle and a mobile information terminal capable of communicating with the straddled vehicle,
   the straddled vehicle including
   a vehicle body containing a handlebar held by a hand of a rider of the straddled vehicle;
   a handlebar switch attached to the handlebar;
   a vehicle image display device attached to the vehicle body and configured to display an image; and
   a vehicle image control device having a function of communicating with the mobile information terminal and configured to control the vehicle image display device,
   the mobile information terminal including:
      a terminal operating device configured to accept, while displaying an image, an operation related to the displayed image; and
      a terminal control device as a computer having a function of communicating with the vehicle image control device and configured to control the terminal operating device,
      the terminal control device being configured to execute the application program to thereby
      select, from a plurality of image groups including image data of one or more content images each displayable on the vehicle image display device, the image groups including the image data transmittable to the vehicle image display device as a plurality of selected image groups in response to a selection operation to the terminal operating device, and
      sequentially choose one display image group from the plurality of selected image groups each time the terminal control device receives a choice instruction of choosing one of the plurality of selected image groups from the vehicle image control device and transmit the image data included in the chosen display image group, and
      the vehicle image control device being configured to transmit, to the terminal control device, the choice instruction for causing the terminal control device to sequentially choose one selected image group from the plurality of selected image groups as the display image group in response to an operation to the handlebar switch by the hand of the rider in a state of holding the handlebar and to, when the vehicle image control device has received the image data included in the display image group from the terminal control device, cause the vehicle image display device to display the content image of the received image data.

The above-described configuration makes it possible to present the intended information in a short time for a large number of presentable information while suppressing the increase in the operation amount of the handlebar switch by the rider of the straddled vehicle and to flexibly accommodate the requests for changes in the presentation conditions or the presentation choice method as with (1) above.

(6) The straddled vehicle system of (5), in which
the handlebar switch includes two or more first switches arranged along a first direction and two or more second switches arranged along a second direction different from the first direction,
the vehicle image control device is configured to transmit the choice instruction to the terminal control device when one of the first switches has been operated and to transmit an image switching instruction causing the terminal control device to sequentially choose one content image from the display image group to the terminal control device when one of the second switches has been operated, and
the terminal control device is configured to, when the terminal control device has received the image switching instruction from the vehicle image control device, execute the application program to thereby sequentially choose one content image from the display image group and transmit the one content image as the image data.

The above-described configuration makes it possible to perform the choice of the image group and the choice of the content image in the image group in a shorter time even when the rider does not gaze at the handlebar switch as compared with a case in which there is no arrangement and the choice types of (6) above, for example. Thus, the intended information can be displayed in a short time for a large number of presentable information while suppressing the increase in the operation amount of the handlebar switch.

(7) The straddled vehicle system of (5) or (6), in which
the terminal control device is configured to, when the terminal control device has received trigger information related to a specific image group included in the selected image group from the outside of the mobile information terminal, forcibly transmit the image data included in the specific image group without receiving the choice instruction.

The above-described configuration makes it possible to present, in an interruption manner, content information which is beneficial to be urgently displayed without waiting for the operation of the handlebar switch.

Further, the present teaching can provide the following application program.

(8) An application program configured to control the mobile information terminal provided in the straddled vehicle system according to any one of (5) to (7),
the application program being configured to be executed by the terminal control device to thereby cause the terminal control device to
select, from a plurality of image groups including image data of one or more content images each displayable on the vehicle image display device, the image groups including the image data transmittable to the vehicle image display device as a plurality of selected image groups in response to a selection operation to the terminal operating device, and
sequentially choose one display image group from the plurality of selected image groups each time the terminal control device receives a choice instruction of choosing one of the plurality of selected image groups from the vehicle image control device and transmit the image data included in the chosen display image group.

The above-described configuration makes it possible to present the intended information in a short time for a large number of presentable information while suppressing the increase in the operation amount of the handlebar switch by the rider of the straddled vehicle and to flexibly accommodate the requests for changes in the presentation conditions or the presentation choice method.

The terminology used herein is for defining particular embodiments only and is not intended to be limiting the teaching. The term "and/or" used herein includes any and all combinations of one or two or more of the associated listed constituent components. The terms "including", "comprising", or "having", and variations thereof used herein specify the presence of stated features, steps, operations, elements, components, and/or equivalents thereof, and can include one or two or more of steps, operations, elements, components, and/or their groups. The terms "attached", "connected", "coupled", and/or equivalents thereof as used herein are used in a broad sense, and include both direct and indirect attachment, connection, and coupling. Further, "connected" and "coupled" are not limited to physical or mechanical connections or couplings but can include direct or indirect electrical connections or couplings. All terms (including technical and scientific terms) used herein have the same meaning as commonly understood by one of ordinary skill in the art to which the present teaching belongs unless otherwise defined herein. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses the number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This Description describes a novel straddled vehicle system and a novel control method. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

### Effects of Invention

The present teaching makes it possible to present intended information in a short time for a large number of presentable information while suppressing the increase in the operation amount of the handlebar switch by the rider of the straddled vehicle.

### Brief Description of Drawings

[FIG. 1] FIG. 1 is a view for explaining a straddled vehicle system according to one embodiment.
[FIG. 2] FIG. 2 is a flowchart illustrating operations of the straddled vehicle system illustrated in FIG. 1.
[FIG. 3] FIG. 3 is a view for explaining one example of the straddled vehicle system illustrated in FIG. 1.
[FIG. 4] FIG. 4 is a flowchart for explaining one example of the straddled vehicle system illustrated in FIG. 1.
[FIG. 5] FIG. 5 is a view for explaining another example of the straddled vehicle system illustrated in FIG. 1.

### Description of Embodiments

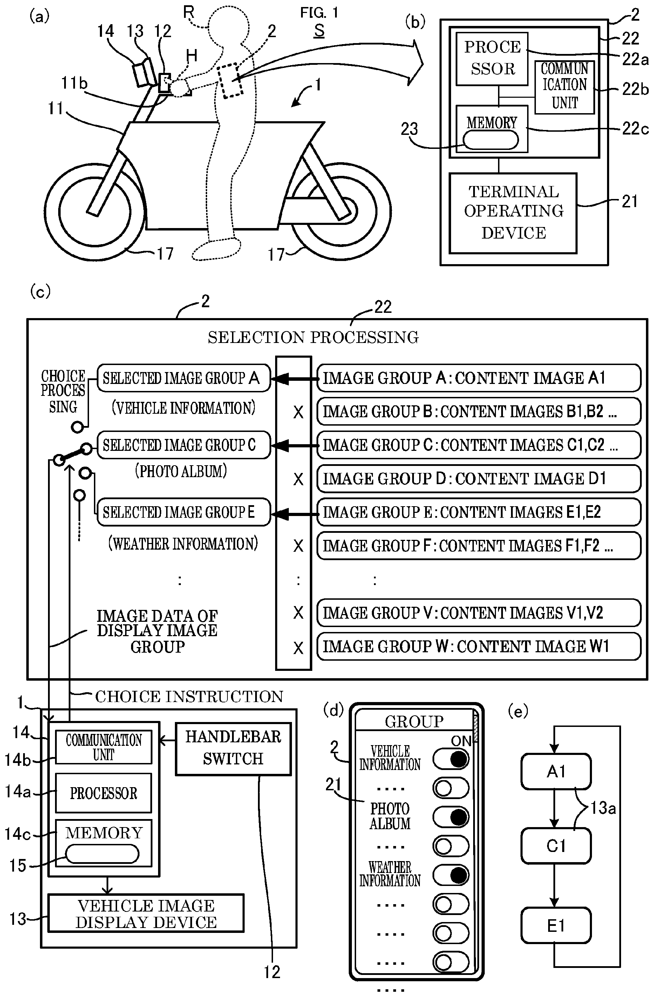

FIG. 1 is a view for explaining a straddled vehicle system according to one embodiment. Part (a) of FIG. 1 is an external view schematically illustrating the straddled vehicle system. Part (b) of FIG. 1 is a block diagram illustrating the configuration of a mobile information terminal. Part (c) of FIG. 1 is a block diagram for explaining operations of the straddled vehicle system. Part (d) of FIG. 1 is a view for explaining a display example of the mobile information terminal. Part (e) of FIG. 1 is a chart for explaining the transition of display in a vehicle image display device.

A straddled vehicle system S illustrated in FIG. 1 includes a straddled vehicle 1, a mobile information terminal 2, and an application program 23. The application program 23 operates on the mobile information terminal 2 capable of communicating with the straddled vehicle 1.

The straddled vehicle 1 includes a vehicle body 11, a handlebar switch 12, a vehicle image display device 13, and a vehicle image control device 14. Further, the straddled vehicle 1 includes wheels 17.

The vehicle body 11 supports the wheels 17. The vehicle body 11 includes a handlebar 11b. The handlebar 11b is held by a hand H of a rider R of the straddled vehicle 1. The handlebar 11b of the straddled vehicle 1 is held by the hand H of the rider R seated on the straddled vehicle 1, so that the straddled vehicle 1 accepts a steering operation.

The handlebar switch 12 is attached to the handlebar 11b. The handlebar switch 12 is provided at a position where the handlebar switch 12 can be operated by the hand H of the rider R in a state of holding the handlebar 11b. The handlebar switch 12 can be operated by the hand H of the rider R in a state of holding the handlebar 11b.

The vehicle image display device 13 is attached to the vehicle body 11. The vehicle image display device 13 displays an image. The vehicle image display device 13 displays a still image. The vehicle image display device 13 serves as a speedometer displaying the traveling speed of the straddled vehicle 1, for example. The vehicle image display device 13 has a region where the traveling speed is displayed and a region different from the region where the traveling speed is displayed as a region where an image is displayed, for example. The vehicle image display device 13 displays a numerical value of the traveling speed as an image, for example. However, a configuration is also adoptable in which the display of the traveling speed in the vehicle image display device 13 is a seven-segment display, for example.

The vehicle image control device 14 has the function of communicating with the mobile information terminal 2. The vehicle image control device 14 can communicate with the mobile information terminal 2 via short-range wireless communication. The short-range wireless communication is, for example, Bluetooth (registered trademark) or Wi-Fi (registered trademark). Further, the vehicle image control device 14 controls the vehicle image display device 13. More specifically, the vehicle image control device 14 controls a display operation of the vehicle image display device 13.

The vehicle image control device 14 is a computer executing a program 15 to thereby control the vehicle image display device 13 as illustrated in a lower part of part (c) of FIG. 1. More specifically, the vehicle image control device 14 includes a processor 14a, a communication unit 14b wirelessly communicating with the mobile information terminal 2, and a memory 14c storing the program 15 and data. The functions and the processing of the vehicle image control device 14 are executed by the processor 14a executing the program 15.

The mobile information terminal 2 can communicate with the straddled vehicle 1. The mobile information terminal 2 includes a terminal operating device 21 and a terminal control device 22 as illustrated in part (b) of FIG. 1. Specifically, the terminal control device 22 has the function of communicating with the vehicle image control device 14. The terminal control device 22 is a computer executing the application program 23 to thereby control the operation of the terminal control device 22.

More specifically, the terminal control device 22 includes a processor 22a executing the application program 23, a communication unit 22b wirelessly communicating with the vehicle image control device 14, and a memory 22c storing the application program 23 and data. The processor 22a executes the application program 23 stored in the memory 22c to thereby communicate with the vehicle image control device 14 and control the terminal operating device 21. The application program 23 is acquired via a computer network, such as the Internet, for example. The straddled vehicle system S is produced by an operation in which the rider R operates the mobile information terminal 2 to acquire the application program 23 and installs the application program 23 in the mobile information terminal 2, for example.

The terminal operating device 21 accepts, while displaying an image, an operation related to the displayed image. The terminal operating device 21 is, for example, a touch screen.

The mobile information terminal 2 can provide image data of a content image displayable on the vehicle image display device 13. The image data is stored in the memory 22c of the mobile information terminal 2, for example. The image data is obtained by the terminal control device 22 communicating with a device other than the mobile information terminal 2 and other than the straddled vehicle 1 via a network, for example. Further, the image data is generated by the terminal control device 22 executing application software, for example. Further, the image data is generated by an imaging operation of a camera (not illustrated) provided in the mobile information terminal 2, for example.

The mobile information terminal 2 has a plurality of image groups. The image data of the content image belongs to any of the image groups. The image group includes image data corresponding to each content image. The image group has image data corresponding to each of one or more content images. The image group corresponds to, for example, application software displaying the content image.

For example, in the example illustrated in part (c) of FIG. 1, the mobile information terminal 2 has the image groups from an image group A to an image group W. The image groups A, B, C, and the like include image data of content images A1, B1, B2, C1, and the like, respectively. For example, the image group A is application software for displaying vehicle information. The image group A has, for example, the content image A1. The image group C is, for example, application software for displaying content images of graphic images generated by a program or captured content images of a display screen. The image group C has, for example, the content image C1, content image C2, and the like. The image group C is, for example, software for a photo album. The image group E is, for example, application software for displaying weather information. The image group E has, for example, content images E1 and E2.

The operations of the vehicle image control device 14 and the mobile information terminal 2 are described. The vehicle image control device 14 executes the program 15 to thereby carry out control processing. Further, the terminal control device 22 of the mobile information terminal 2 executes the application program 23 to thereby carry out control processing.

The terminal control device 22 executes the application program 23 to thereby select, from the image groups A, B, C, and the like, the image group having the image data transmittable to the vehicle image display device 13 as the selected image group. More specifically, the terminal control device 22 accepts, while causing the terminal operating device 21 to display an image, an operation related to the displayed image to thereby perform the selection. The terminal control device 22 selects, while causing the terminal operating device 21 to display a list of the image groups A, B, C, and the like as illustrated in part (d) of FIG. 1, a selected image group in response to an operation to a part of the terminal operating device 21 corresponding to the display position of the image group. In the example illustrated in part (d) of FIG. 1, the list of the image groups A, B, C, and the like and toggle switches are displayed, and the selection is performed in response to a dragging operation to the display position of the toggle switch. The terminal control device 22 selects selected image groups A, C, and E in response to the selection operation to the terminal operating device 21 as illustrated in "selection processing" in part (c) of FIG. 1, for example.

The terminal operating device 21 chooses one from the plurality of selected image groups A, C, and E as a display image group each time the terminal operating device 21 receives a choice instruction from the vehicle image control device 14. The terminal operating device 21 sequentially chooses one display image group from the plurality of selected image groups A, C, and E. For example, the terminal operating device 21 chooses one display image group so as to circulate through the plurality of selected image groups A, C, and E each time the terminal operating device 21 receives the choice instruction. The terminal operating device 21 transmits one of the image data included in the chosen display image group to the vehicle image control device 14.

In contrast, the vehicle image control device 14 provided in the vehicle body 11 transmits the choice instruction to the terminal control device 22 of the mobile information terminal 2 in response to an operation to the handlebar switch 12. The handlebar switch 12 is operated by the hand H of the rider R in a state of holding the handlebar 11b. The choice instruction is the instruction for causing the terminal control device 22 to choose one display image group from the plurality of selected image groups A, C, and E.

When the vehicle image control device 14 has received the image data included in the display image group from the terminal control device 22, the vehicle image control device 14 causes the vehicle image display device 13 to display the content image of the image data.

More specifically, the list of the image groups A, B, C, and the like, such as "vehicle information", "photo album", and "weather information", is displayed on the terminal operating device 21 of the mobile information terminal 2 as illustrated in part (d) of FIG. 1, for example. The selected image group is selected by the rider R operating the position corresponding to each item in the list of the image groups displayed on the terminal operating device 21. In the examples illustrated in parts (c) and (d) of FIG. 1, the image group A for the vehicle information, the image group C for the photo album, and the image group E for the weather information are selected as the selected image group.

Then, the choice instruction is transmitted from the vehicle image control device 14 to the terminal control device 22 in response to an operation to the handlebar switch 12.

In the terminal operating device 21, each time the terminal operating device 21 receives the choice instruction, one display image group is sequentially chosen from the plurality of selected image groups A, C, and E, and the image data belonging to the chosen display image group is transmitted.

Upon receiving the image data by the vehicle image control device 14, the content image of this image data is displayed on the vehicle image display device 13.

As a result, each time the handlebar switch 12 is operated, the content images belonging to the selected image groups A, C, and E are sequentially displayed on the vehicle image display device 13, more specifically in a display region 13a as illustrated in part (e) of FIG. 1. Thus, one of the selected image groups A, C, and E is chosen as the display image group. When the chosen display image group includes a plurality of content images, one content image is sequentially chosen, by the terminal operating device 21, from the plurality of content images belonging to the display image group in each operation different from the choice of the display image group and transmitted to the vehicle image control device 14. However, the plurality of content images in the chosen display image group may be switched or chosen with the passage of time rather than the operation, for example.

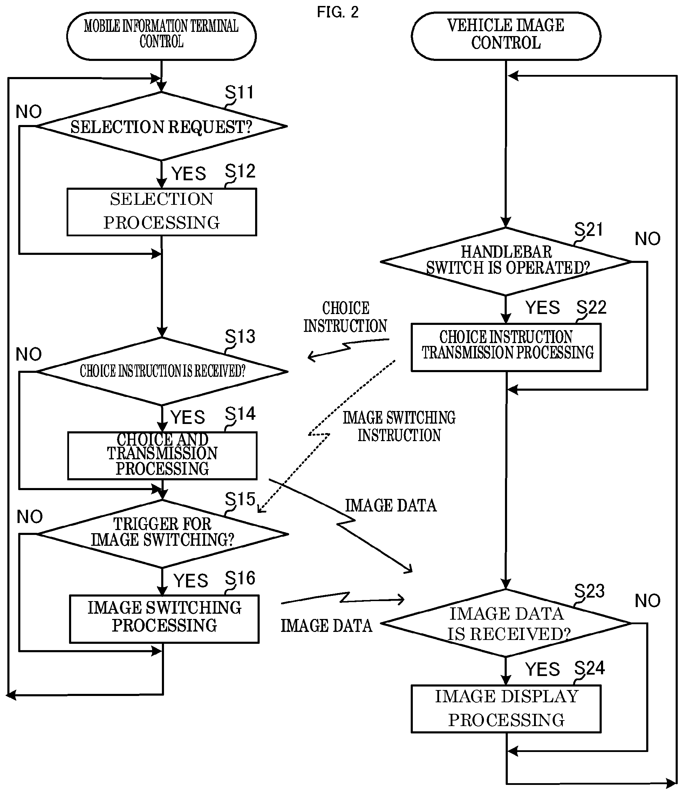

FIG. 2 is a flowchart for explaining the operations of the straddled vehicle system illustrated in FIG. 1. FIG. 2 illustrates control in the mobile information terminal 2 and control in the vehicle image control device 14.

The control in the mobile information terminal 2 is carried out by the terminal control device 22 executing the application program 23. The control in the vehicle image control device 14 is carried out by the vehicle image control device 14 executing the program 15.

The terminal control device 22 executes selection processing (S12) when a selection request has been input (Yes in S11). The selection request is input through the selection operation to the terminal operating device 21 after the application program 23 has been installed and launched on the mobile information terminal 2. The mobile information terminal 2 causes the terminal operating device 21 to display the list of the image groups A, B, C, and the like as illustrated in part (d) of FIG. 1, and the selection request is input in response to the selection operation to the terminal operating device 21. By Steps S11 and S12, the selected image groups (e.g., A, C, and E illustrated in part (c) of FIG. 1) are selected from the image groups A to W.

The vehicle image control device 14 executes choice instruction transmission processing (S22) each time the handlebar switch 12 is operated (Yes in S21). The vehicle image control device 14 transmits the choice instruction to the terminal control device 22.

When the terminal control device 22 has received the choice instruction from the vehicle image control device 14 (Yes in S13), the terminal control device 22 executes choice and transmission processing (S14). The terminal control device 22 sequentially chooses one display image group from the plurality of selected image groups A, C, and E each time the terminal control device 22 receives the choice instruction. The terminal control device 22 transmits the image data included in the chosen display image group to the vehicle image control device 14.

Upon receiving the image data (Yes in S23), the vehicle image control device 14 executes image display processing (S24). The vehicle image control device 14 causes the vehicle image display device 13 to display the content image of the received image data. The vehicle image control device 14 causes the vehicle image display device 13 to maintain the display of the content image in the vehicle image display device 13 until the next image data is received.

When a trigger for image switching is detected (Yes in S15), the terminal control device 22 executes image switching processing (S16). When a plurality of image data is included in the currently chosen display image group, the terminal control device 22 transmits the image data following the last transmitted image data to the vehicle image control device 14. Thus, the vehicle image control device 14 switches the images to be displayed on the vehicle image display device 13 in the range of the currently chosen display image group. The trigger for image switching is, for example, a trigger to receive a switching instruction transmitted by the vehicle image control device 14 in response to an image switching operation to the handlebar switch 12. However, as the trigger for image switching, a configuration can also be adopted in which the trigger for image switching is generated by timing by the terminal control device 22, for example. In this case, the content images are regularly or irregularly switched without any operation.

As described above, the vehicle image control device 14 executes the choice instruction transmission processing (S21, S22) and the image display processing (S23, S24). The terminal control device 22 executes the selection processing (S11, S12) and the choice and transmission processing (S13, S14).

In this embodiment, the selected image group to be chosen in response to the operation to the handlebar switch 12 is selected in advance using the terminal operating device 21 in the mobile information terminal 2. The terminal operating device 21 of the mobile information terminal 2 accepts, while displaying an image, an operation related to the displayed image as illustrated in part (d) of FIG. 1, for example, and therefore can perform an operation, such as choice by scrolling or tapping of the image group list, for example. Therefore, even when the number of the images groups A to W including displayable content images is large, the selected image groups (e.g., A, C, E) serving as the candidates can be narrowed down in a short time by a simple operation. In an operation to the handlebar switch 12 performed in a state in which the rider R is holding the handlebar 11b with the hand H, one selected image group is sequentially chosen from the narrowed-down selected image groups A, C, and E. Therefore, the intended image group can be chosen by fewer operations than those in choosing the same from the large number of original displayable image groups A to W as illustrated in part (e) of FIG. 1.

Thus, the above-described configuration makes it possible to display the intended image in a short time for a large number of displayable images while suppressing the increase in the operation amount of the handlebar switch 12 by the rider R of the straddled vehicle 1.

Further, each time the image data is transmitted from the mobile information terminal 2, the vehicle image control device 14 of this embodiment displays the image of the transmitted image data. The vehicle image control device 14 is not required to record the image data of all the image groups from the image group A to the image group W. The storage capacity for displaying images of the vehicle image control device 14 provided in the straddled vehicle 1 is sufficient for the capacity to display images of the image data transmitted from the mobile information terminal 2, regardless of the amount of the image data of all of the image groups. Thus, even when the amount of the images which can serve as display candidates increases with the passage of time, the increase in the amount of the images can be accommodated without replacing the vehicle image control device 14 of the straddled vehicle 1. Further, according to this embodiment, the handlebar switch 12 of the straddled vehicle 1 is sufficient to have the configuration and the function of receiving an operation of sequentially choosing one selected image group from the selected image groups and an operation of sequentially choosing one image from the images belonging to the chosen one group. Therefore, the display for the large number of image groups A to W can be accommodated while simplifying the configuration provided in the straddled vehicle 1. Specification changes for changing of the selection method or adapting to the larger number of image groups can also be accommodated by updating the application program 23 in the mobile information terminal 2, for example. Thus, changing of the selection method and adapting to the larger number of image groups can be accommodated while suppressing changes involving modifications to the straddled vehicle 1.

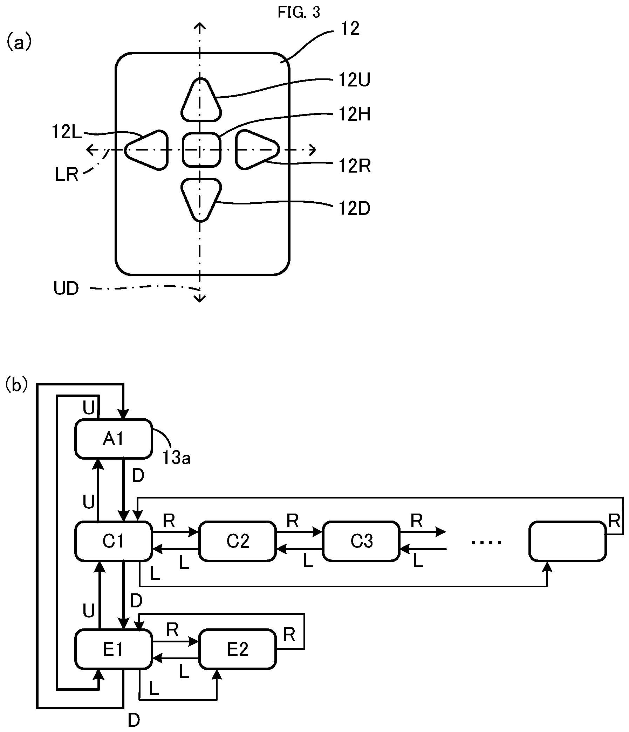

FIG. 3 is a view for explaining one example of the straddled vehicle system illustrated in FIG. 1. Part (a) of FIG. 3 is an external view illustrating one example of the handlebar switch. Part (b) of FIG. 3 is a chart illustrating an example of the transition of images in response to an operation to the handlebar switch. A description is given also with reference to FIG. 1.

As illustrated in part (a) of FIG. 3, the handlebar switch 12 may include two first switches 12U and 12D and two second switches 12L and 12R. Further, the handlebar switch 12 may include an enter switch 12H. The first switches 12U and 12D are arranged along a first direction UD. The second switches 12L and 12R are arranged along a second direction LR. The first switches 12U and 12D are aligned in the first direction UD. The second switches 12L and 12R are aligned in the second direction LR.

In this case, the vehicle image control device 14 transmits the choice instruction to the terminal control device 22 when the first switches 12U and 12D have been operated. For example, the vehicle image control device 14 transmits a forward choice instruction when the first switch 12D has been operated and transmits a reverse choice instruction when the first switch 12U has been operated. The forward choice instruction and the reverse choice instruction are types of the choice instructions.

When the second switches 12L and 12R have been operated, the vehicle image control device 14 transmits an image switching instruction to the terminal control device 22. The image switching instruction is an instruction for switching the content images included in the currently chosen display image group. The image switching instruction includes two types of a forward image switching instruction and a reverse image switching instruction. For example, the vehicle image control device 14 transmits the forward image switching instruction when the second switch 12R has been operated and transmits the reverse image switching instruction when the second switch 12L has been operated.

The terminal control device 22 executes the application program 23 to thereby sequentially chooses one content image from the currently chosen display image group and transmits the chosen content image as image data when the terminal control device 22 has received the image switching instruction from the vehicle image control device 14.

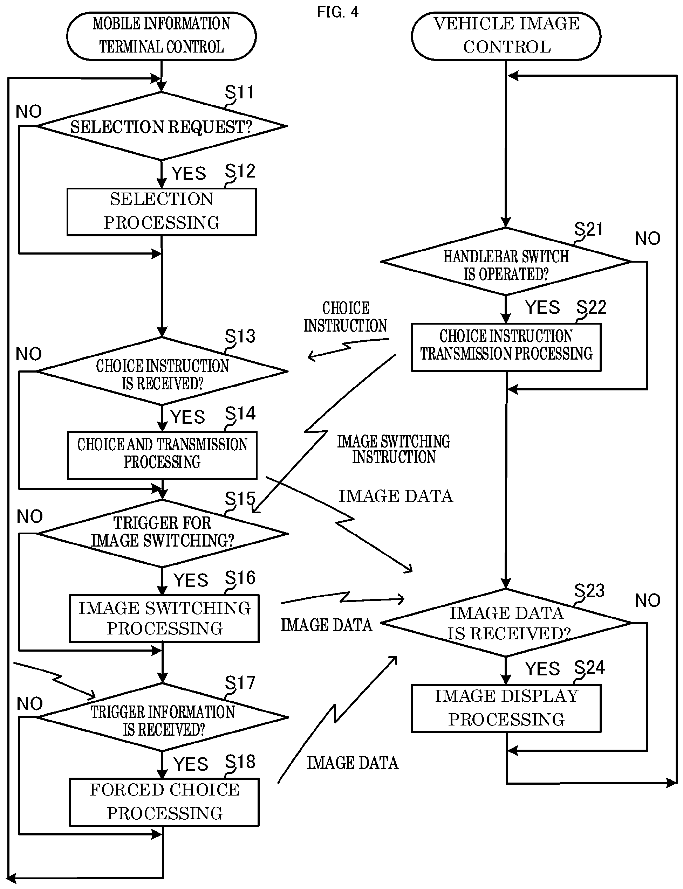

FIG. 4 is a flowchart illustrating one example of the straddled vehicle system illustrated in FIG. 1.

The elements common to FIG. 2 in FIG. 4 are attached by the same reference numerals as those in FIG. 2 for clarity and duplicate descriptions are omitted.

In the choice instruction transmission processing of Step S22 illustrated in FIG. 4, the vehicle image control device 14 transmits the choice instruction to the terminal control device 22 when the first switch 12U or 12D (refer to FIG. 3) has been operated and transmits the image switching instruction to the terminal control device 22 when the second switch 12L or 12R has been operated.

The image switching instruction to be transmitted from the vehicle image control device 14 is treated as the trigger for image switching (S15) in Step S15 in the terminal control device 22. Upon receiving the image switching instruction, the terminal control device 22 executes the image switching processing (S16).

For example, when the selected image groups A, C, and E are selected as illustrated in part (b) of FIG. 3, one display image group is sequentially chosen from the selected image groups A, C, and E when the rider R operates the first switch 12U or 12D. "U", "D", "R", and "L" indicate the operations of the first switches 12U and 12D and the second switches 12L and 12R, respectively. The choice order is reversed between the first switch 12U and the first switch 12D. With the change of the display image group by choice, the image data belonging to the new display image group is transmitted to the vehicle image display device 13, and the image to be displayed in the display region 13a of the vehicle image display device 13 is switched.

When the rider R operates the second switch 12R or 12L in a case in which either the selected image group C or E to which the plurality of images belongs is chosen as the display group, the image to be displayed is chosen from the images belonging to the currently chosen display group. For example, when the second switch 12R or 12L is operated in a situation in which the selected image group C is chosen as the display group, new image data of the selected image group C is transmitted. As a result, the content images C1, C2, C3, and the like displayed in the display region 13a of the vehicle image display device 13 are switched. The choice order is reversed between the second switch 12R and the second switch 12L.

Since the direction in which the first switches 12U and 12D are arranged is different from the direction in which the second switches 12R and 12L are arranged, the operation types are easily distinguished. Therefore, even when the rider R does not gaze at the handlebar switch 12, the choice of the image group and the choice of the content image in the image group can be accurately performed in a short time. Therefore, the intended image can be displayed in a shorter time for a large number of displayable images while suppressing the increase in the operation amount of the handlebar switch 12.

Part (a) of FIG. 3 illustrates that the handlebar switch 12 has the two first switches 12U and 12D and the two second switches 12L and 12R. However, the number of each of the first switch and the second switch is not particularly limited and may be more than two. For example, an additional switch can be utilized for order skip choice. The number of each of the first switch and the second switch may be one. In this case, only the forward choice can be realized.

Further, the terminal control device 22 may execute the application program 23 to thereby execute forced choice processing (S18) when the terminal control device 22 has received specific trigger information (Yes in S17 of FIG. 4).

The forced choice processing is processing of forcibly transmitting the image data included in a specific image group without receiving the choice instruction. The trigger information is data to be received from the outside of the mobile information terminal 2. The trigger information is data set to be associated with the specific image group in advance in the application program 23. A communication unit 14b of the terminal control device 22 has the function of communicating with an external computer of the mobile information terminal 2 and the straddled vehicle 1 via the Internet, for example. The terminal control device 22 receives the trigger information from the outside of the mobile information terminal 2 and the straddled vehicle 1 via the communication unit 14b. The trigger information is, for example, an earthquake early warning set in the terminal control device 22 associated with the image group E that is weather information.

When the terminal control device 22 has received the earthquake early warning as the trigger information, for example (Yes in S17), the terminal control device 22 forcibly chooses the specific image group E that is weather information as the chosen image group without receiving the choice instruction. Then, the terminal control device 22 transmits the image data included in the chosen image group E to the vehicle image control device 14. The vehicle image control device 14 causes the vehicle image display device 13 to display the image of the received image data. Therefore, when the mobile information terminal 2 receives the earthquake early warning, an image of the weather information including the earthquake early warning is displayed on the vehicle image display device 13 without the operation of the rider R.

Herein, the description is given using the example of the earthquake early warning in the image group that is the weather information. However, the trigger information is not particularly limited and may also be incoming call information in an image group of a phone, for example.

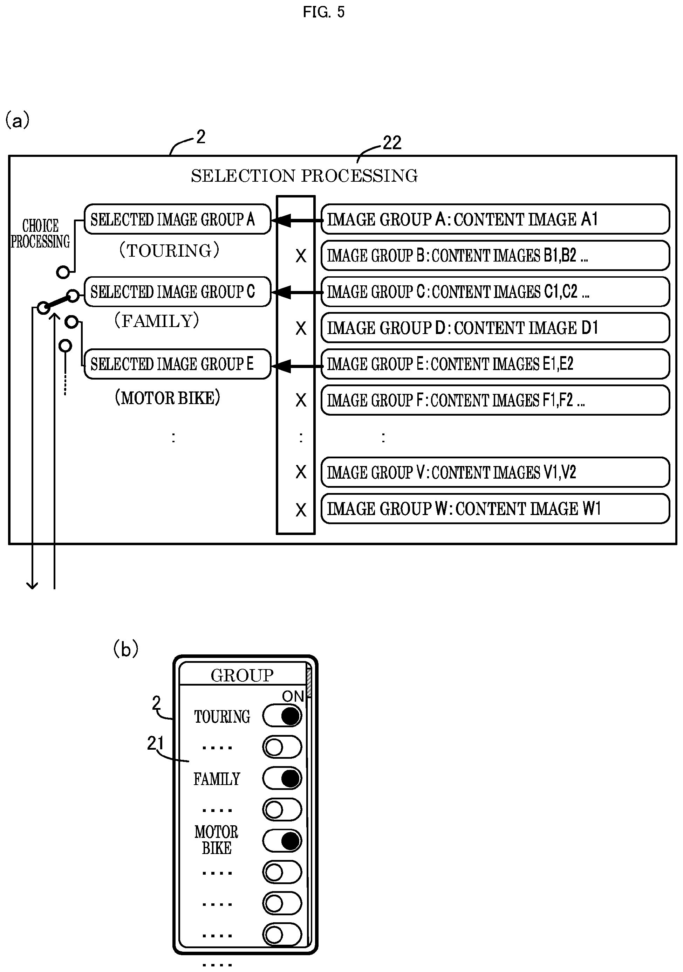

FIG. 5 is a view for explaining another example of the straddled vehicle system illustrated in FIG. 1.

Part (a) of FIG. 5 is a block diagram for explaining operations in the mobile information terminal of the straddled vehicle system. Part (b) of FIG. 5 is a view for explaining a display example of the mobile information terminal.

The image groups A to W illustrated in FIG. 5 may correspond to folders of images in photo album software. For example, the image group A is a folder of photographs related to touring and the image group C is a folder of family photographs. These image data are stored in the memory 22c of the terminal control device 22 in the mobile information terminal 2, for example.

In a case of the example illustrated in FIG. 5, the terminal control device 22 causes the terminal operating device 21 to display the list of the image groups A, B, C, and the like as illustrated in part (b) of FIG. 5, for example. With the display, the terminal control device 22 selects a selected image group in response to an operation to a part of the terminal operating device 21 corresponding to the display position of the image group. In the example illustrated in part (b) of FIG. 5, the list of the image groups A, B, C, and the like which are the folders of photo albums and toggle switches are displayed, and the selection is performed in response to a dragging operation to the display position of the toggle switch. The terminal control device 22 selects the selected image groups A, C, and E in response to the selection operation to the terminal operating device 21 as illustrated in part (c) of FIG. 1.

- 1: straddled vehicle
- 2: mobile information terminal
- 11: vehicle body
- 11b: handlebar
- 12: handlebar switch
- 12U, 12D: first switch
- 12R, 12L: second switch
- 13: vehicle image display device
- 14: vehicle image control device
- 21: terminal operating device
- 22: terminal control device
- 23: application program
- S: straddled vehicle system

## Claims

1. A straddled vehicle system including a straddled vehicle and an application program configured to operate on a mobile information terminal capable of communicating with the straddled vehicle,
the straddled vehicle comprising:
a vehicle body containing a handlebar held by a hand of a rider of the straddled vehicle;
a handlebar switch attached to the handlebar;
a vehicle image display device attached to the vehicle body and configured to display an image; and
a vehicle image control device having a function of communicating with the mobile information terminal and configured to control the vehicle image display device,
the mobile information terminal comprising:
a terminal operating device configured to accept, while displaying an image, an operation related to the displayed image; and
a terminal control device as a computer having a function of communicating with the vehicle image control device and configured to control the terminal operating device,
the application program being configured to be executed by the terminal control device to thereby cause the terminal control device to
select, from a plurality of image groups including image data of one or more content images each displayable on the vehicle image display device, the image groups including the image data transmittable to the vehicle image display device as a plurality of selected image groups in response to a selection operation to the terminal operating device, and
sequentially choose one display image group from the plurality of selected image groups each time the terminal control device receives a choice instruction of choosing one of the plurality of selected image groups from the vehicle image control device and transmit the image data included in the chosen display image group, and
the vehicle image control device being configured to transmit, to the terminal control device, the choice instruction for causing the terminal control device to sequentially choose one selected image group from the plurality of selected image groups as the display image group in response to an operation to the handlebar switch by the hand of the rider in a state of holding the handlebar and to, when the vehicle image control device has received the image data included in the display image group from the terminal control device, cause the vehicle image display device to display the content image of the received image data.

2. The straddled vehicle system according to claim 1, wherein
the handlebar switch includes two or more first switches arranged along a first direction and two or more second switches arranged along a second direction different from the first direction,
the vehicle image control device is configured to transmit the choice instruction to the terminal control device when one of the first switches has been operated and to transmit, to the terminal control device, an image switching instruction causing the terminal control device to sequentially choose one content image from the display image group when one of the second switches has been operated, and
the application program is configured to be executed by the terminal control device to thereby cause the terminal control device to sequentially choose one content image from the display image group and transmit the one content image as the image data when the terminal control device has received the image switching instruction from the vehicle image control device.

3. The straddled vehicle system according to claim 1 or 2, wherein
the application program is configured to be executed by the terminal control device to thereby cause
the terminal control device to, when the terminal control device has received trigger information related to a specific image group included in the selected image group from an outside of the mobile information terminal, forcibly transmit the image data included in the specific image group without receiving the choice instruction.

4. A control method for controlling display of a vehicle image display device attached to a vehicle body of a straddled vehicle using a mobile information terminal including a terminal control device capable of communicating with the straddled vehicle and a terminal operating device, the method comprising:
selecting, from a plurality of image groups including image data of one or more content images each displayable on the vehicle image display device, the image groups including the image data transmittable to the vehicle image display device as a plurality of selected image groups in response to a selection operation to the terminal operating device;
transmitting a choice instruction for causing the terminal control device to sequentially choose one display image group from the plurality of selected image groups to the terminal control device in response to an operation to a handlebar switch attached to a handlebar of the vehicle body;
each time the terminal control device receives the choice instruction of choosing one of the plurality of selected image groups, sequentially choosing the one display image group from the plurality of selected image groups and transmitting the image data included in the chosen display image group; and
displaying the content image of the received image data on the vehicle image display device when the image data included in the display image group from the terminal control device has been received.

5. A straddled vehicle system including a straddled vehicle and a mobile information terminal capable of communicating with the straddled vehicle,
the straddled vehicle comprising:
a vehicle body containing a handlebar held by a hand of a rider of the straddled vehicle;
a handlebar switch attached to the handlebar;
a vehicle image display device attached to the vehicle body and configured to display an image; and
a vehicle image control device having a function of communicating with the mobile information terminal and configured to control the vehicle image display device,
the mobile information terminal comprising:
a terminal operating device configured to accept, while displaying an image, an operation related to the displayed image; and
a terminal control device as a computer having a function of communicating with the vehicle image control device and configured to control the terminal operating device,
the terminal control device being configured to execute an application program to thereby
select, from a plurality of image groups including image data of one or more content images each displayable on the vehicle image display device, the image groups including the image data transmittable to the vehicle image display device as a plurality of selected image groups in response to a selection operation to the terminal operating device, and
sequentially choose one display image group from the plurality of selected image groups each time the terminal control device receives a choice instruction of choosing one of the plurality of selected image groups from the vehicle image control device and transmit the image data included in the chosen display image group, and
the vehicle image control device being configured to transmit, to the terminal control device, the choice instruction for causing the terminal control device to sequentially choose one selected image group from the plurality of selected image groups as the display image group in response to an operation to the handlebar switch by the hand of the rider in a state of holding the handlebar and to, when the vehicle image control device has received the image data included in the display image group from the terminal control device, cause the vehicle image display device to display the content image of the received image data.

6. The straddled vehicle system according to claim 5, wherein
the handlebar switch includes two or more first switches arranged along a first direction and two or more second switches arranged along a second direction different from the first direction,
the vehicle image control device is configured to transmit the choice instruction to the terminal control device when one of the first switches has been operated and to transmit an image switching instruction causing the terminal control device to sequentially choose one content image from the display image group to the terminal control device when one of the second switches has been operated, and
the terminal control device is configured to, when the terminal control device has received the image switching instruction from the vehicle image control device, execute the application program to thereby sequentially choose one content image from the display image group and transmit the one content image as the image data.

7. The straddled vehicle system according to claim 5 or 6, wherein
the terminal control device is configured to, when the terminal control device has received trigger information related to a specific image group included in the selected image group from an outside of the mobile information terminal, forcibly transmit the image data included in the specific image group without receiving the choice instruction.

8. An application program configured to control the mobile information terminal provided in the straddled vehicle system according to any one of claims 5 to 7,
the application program being configured to be executed by the terminal control device to thereby cause the terminal control device to
select, from a plurality of image groups including image data of one or more content images each displayable on the vehicle image display device, the image groups including the image data transmittable to the vehicle image display device as a plurality of selected image groups in response to a selection operation to the terminal operating device, and
sequentially choose one display image group from the plurality of selected image groups each time the terminal control device receives a choice instruction of choosing one of the plurality of selected image groups from the vehicle image control device and transmit the image data included in the chosen display image group.
